# FASCICULE DE BREVET EUROPEEN

(11) **EP 2 523 751 B1**
(45) Date de publication et mention de la délivrance du brevet: **22.10.2014**
(21) Numéro de dépôt: 11702514.8
(22) Date de dépôt: 11.01.2011
(51) Int. Cl.: B01J 13/08, D06M 23/12

(54) **NANOPARTICULES ANTI-UV**
ANTI-UV-NANOPARTIKEL
ANTI-UV NANOPARTICLES

(30) Priorité: 11.01.2010 FR 1050133
(43) Date de publication de la demande: 21.11.2012
(73) Titulaire: Commissariat à l'Énergie Atomique et aux Énergies Alternatives, 75015 Paris (FR)
(72) Inventeur: PONCELET, Olivier, F-38000 Grenoble (FR); RENARD, Olivier, F-38120 Fontanil-cornillon (FR)
(74) Mandataire: Nony
(86) Numéro de dépôt international: PCT/IB2011/050114
(87) Numéro de publication internationale: WO 2011/083447

(56) Documents cités:
- EP-A1- 1 247 568
- WO-A1-00/35415
- WO-A2-2008/061885
- US-A1- 2003 195 133
- US-A1- 2009 155 371
- US-B1- 6 368 577

## Description

La présente invention vise à proposer des nanoparticules à fonction anti-UV, dispersables dans l'eau, dotées d'une stabilité prolongée dans le temps, et stables sous rayonnement UV.

Les absorbeurs d'UV sont largement employés dans des applications diverses où il est souhaité mettre à profit leur propriété d'absorbance UV. Ils permettent de protéger les matériaux auxquels ils sont associés des rayonnements UV-visible.

Ces absorbeurs d'UV peuvent être de nature inorganique à l'image des oxydes métalliques tels que TiO₂, ZnO ou CeO₂, ou organiques à l'image des benzophénones substituées telles les hydroxybenzophénones et des benzotriazoles substitués.

Ces derniers absorbeurs d'UV organiques présentent de bonnes propriétés d'absorbance UV et de stabilité. Ils possèdent en outre l'avantage d'être régénérables, mettant en oeuvre des mécanismes de dissipation de l'énergie absorbée par changement conformationel réversible.

Toutefois, la plupart de ce type de composés chimiques organiques possède un caractère fortement hydrophobe qui rend difficile, voire impossible leur mise en oeuvre dans des formulations aqueuses. Leur défaut de solubilité en milieu aqueux nécessite de les mettre en oeuvre soit en milieu solvant organique, soit sous une forme modifiée pour leur conférer la solubilité requise en milieu aqueux.

Concernant la première alternative, il est aujourd'hui nécessaire, dans un souci de protection de l'environnement et de limitation des rejets gazeux ou liquides, de privilégier l'usage de l'eau à celui des solvants organiques.

Concernant la seconde alternative qui vise à adapter l'affinité d'un composé chimique pour un solvant par greffage d'un groupement organique adapté tel que par exemple ammonium, carboxylate ou sulfonate, elle peut malheureusement porter, par ailleurs, préjudice aux propriétés d'absorbance UV du composé ainsi modifié.

Ainsi, dans le cas des absorbeurs d'UV organiques régénérables ou non, qui présentent une forte aromaticité, le greffage de substituants peut entraîner des déplacements des spectres d'absorption vers le visible. Ceci pose problème dans les domaines applicatifs où le domaine du visible ne doit pas être affecté.

En effet, l'usage de matériaux dotés, en outre, de forts coefficients d'absorption à des longueurs d'onde inférieures à 400 nm, a précisément pour avantage de les rendre totalement transparents dans le domaine du visible et donc de ne pas affecter parallèlement l'effet coloriel du matériau colorant susceptible de leur être associé.

D'autre part, en raison du fort caractère hydrophobe de certains absorbeurs d'UV organiques, la présence d'un groupement fonctionnel hydrophile peut se révéler insuffisante pour assurer leur solubilité dans l'eau.

Enfin, le greffage de substituants peut également présenter quelques contraintes liées à la mise en oeuvre des absorbeurs d'UV ainsi modifiés dans les formulations. Ainsi, le greffage d'un groupement carboxylique nécessite, par exemple, de disperser le composé correspondant en milieu basique.

US 6 368 577 B1 décrit une nanoparticule possédant un coeur formé d'un filtre organique d'UV, sous forme cristallisée, enrobé d'une couche externe formée d'alcool polyvinylique.

WO 2008/061885 A2 décrit un procédé de préparation de microcapsules comprenant les étapes consistant à : 1) disposer d'une solution monomérique contenant une liquide hydrophobe et 2-hydroxybenzophenone à l'état de soluté; 2) disposer d'une phase aqueuse contenant un polymère hydrophile; 3) ajouter la solution monomérique à la phase aqueuse dans des conditions propices à la formation d'une émulsion en présence d'un tensioactif apte à stabiliser l'émulsion; 4) réaliser une polymérisation pour former des microcapsule.

En conséquence, il demeure un besoin d'une technologie permettant d'accroître la solubilité aqueuse d'absorbeurs d'UV organiques conventionnels sans par ailleurs affecter leurs propriétés absorbantes UV.

Il demeure également un besoin en absorbeurs d'UV organiques qui présentent une affinité pour l'eau et qui soient en outre compatibles avec une formulation en un milieu aqueux à une concentration élevée. L'accessibilité à une concentration élevée est en effet recherchée au regard du fait que certains absorbeurs d'UV organiques doivent être utilisés en quantités assez importantes par unité de surface pour être efficaces.

La présente invention vise précisément à répondre à ces besoins.

Ainsi, selon un de ses aspects, la présente invention a pour objet des nanoparticules possédant un coeur formé en tout ou partie d'au moins un composé organique absorbeur d'UV, sous forme cristallisée, enrobé d'une couche externe formée d'au moins un polymère hydrophile, lesdits composé(s) organique(s) absorbeur(s) d'UV et polymère(s) hydrophile(s) étant associés dans un rapport pondéral composé(s) organique(s)/polymère(s) hydrophile(s) variant de 0,2 à 0,4.

Avantageusement, les nanoparticules considérées selon l'invention sont hydrodispersibles.

Les polymères hydrophiles considérés selon l'invention sont un alcool polyvinylique ou un acide polyacrylique et possèdent un poids moléculaire supérieur à 20 000 g/mole. Avantageusement, la couche externe des nanoparticules est non réticulée.

D'une manière générale, les nanoparticules selon l'invention sont non poreuses.

L'invention a également pour objet une composition contenant de telles nanoparticules.

Elle vise également un procédé de préparation de ces nanoparticules comprenant au moins les étapes consistant à :
- disposer d'une phase organique contenant au moins un composé absorbeur d'UV à l'état de soluté,
- disposer d'une phase aqueuse contenant au moins ledit polymère hydrophile,
- ajouter la phase organique à la phase aqueuse dans des conditions propices à la formation d'une émulsion de type phase organique dans phase aqueuse et en présence d'au moins un tensioactif apte à stabiliser ladite émulsion,
- réaliser une trempe thermique de l'émulsion ainsi obtenue pour former lesdites nanoparticules, et
- isoler lesdites nanoparticules,
les quantités en polymère(s) et composé(s) organique(s) étant ajustées pour que les nanoparticules possèdent un rapport pondéral composé(s) organique(s)/polymère(s) hydrophile(s) variant de 0,2 à 0,4.

Selon un mode de réalisation préféré, les nanoparticules sont isolées du milieu les contenant par lyophilisation de celui-ci.

Comme démontré par les exemples figurant ci-après, les inventeurs ont ainsi constaté que des composés organiques absorbeurs d'UV peuvent être formulés à l'état de nanoparticules dispersables en milieu aqueux en recouvrant au moins en partie leur surface externe d'un film de polymère(s) présentant une grande affinité pour l'eau.

Contre toute attente, leurs performances en termes d'absorption UV et de stabilité ne sont pas affectées.

### Nanoparticules

Le composé organique absorbeur d'UV, formant en partie ou totalement le coeur des nanoparticules, utilisable selon la présente invention peut être choisi parmi :
- les benzotriazoles substitués,
- les benzophénones substituées telles les hydroxybenzophénones,
- le pyrène et ses dérivés,
- autres antioxydants et
- pièges à radicaux, tel le Bis(2,2,6,6-tetramethyl-4-piperidy) sebacate
- l'hexylester de l'acide 2-(4-Diethylamino-2-hydroxybenzoyl) benzoique et leurs mélanges.

Pour sa part, le polymère hydrophile peut être choisi parmi les polymères à fort caractère hydrophile ayant une longueur de chaîne moléculaire suffisamment longue pour présenter une affinité avec le coeur organique.

Comme précisé ci-dessus, il permet de s'affranchir du caractère hydrophobe du coeur organique et d'assurer la cohésion du coeur des nanoparticules.

Un polymère hydrophile convenant à l'invention possèdent un poids moléculaire supérieur à 20 000 g/mole, et plus particulièrement variant de 25 000 à 600 000 g/mole.

Le polymère hydrophile est un alcool polyvinylique ou un acide polyacrylique.

Les acides polyacryliques possèdent avantageusement un poids moléculaire compris entre 100 000 et 600 000 et notamment de l'ordre de 450 000 g/mole.

D'autres polymères hydrosolubles, des copolymères, ou les dérivés de tels matériels seront apparents à l'homme de l'art.

Plus particulièrement, il s'agit d'un alcool polyvinylique.

Comme précisé ci-dessus, le polymère considéré selon l'invention est dédié à assurer la dispersion du composé absorbeur d'UV qui lui est associé en milieu aqueux. Pour des raisons évidentes, sa nature chimique, de même que la longueur de sa chaîne polymérique et donc son poids moléculaire sont des paramètres permettant d'ajuster cette solubilité en milieu aqueux.

Les inventeurs ont notamment constaté que des polymères à l'image des alcools polyvinyliques s'avèrent particulièrement efficaces lorsqu'ils possèdent un poids moléculaire supérieur à 20 000 g/mole, et plus particulièrement variant de 25 000 à 500 000 g/mole.

Selon une variante de réalisation avantageuse, les nanoparticules possèdent une couche externe formée en tout ou partie d'au moins un alcool polyvinylique de poids moléculaire variant de 25 000 à 100 000 g/mole, et plus particulièrement de 25 000 à 50 000 g/mole.

Lesdits composé(s) organique(s) absorbeur(s) d'UV et polymère(s) hydrophile(s) sont associés dans un rapport pondéral composé(s) organique(s)/polymère(s) hydrophile(s) variant de 0,2 à 0,4, en particulier de l'ordre de 0,3.

Ce rapport peut encore être apprécié comme figurant le taux de charge correspondant au poids de la matière formant le coeur d'une nanoparticule rapporté au poids total de ladite nanoparticule.

Les nanoparticules selon l'invention peuvent avantageusement posséder une taille moyenne inférieure à 500 nm, de préférence inférieure à 300 nm, de préférence encore inférieure à 200 nm.

Cette taille peut être déterminée par spectroscopie à corrélation de photons.

Selon un mode de réalisation particulier de l'invention, les nanoparticules peuvent posséder une taille très réduite, notamment variant de 20 à 100 nm, notamment de 25 à 60 nm. Cette taille plus réduite peut être ajustée par mise en contact des nanoparticules obtenues selon le procédé décrit ci-après, avec un mauvais solvant du polymère formant la couche externe de ces nanoparticules.

Selon une autre variante de réalisation, les nanoparticules peuvent contenir, en leur coeur, outre au moins un composé organique absorbeur d'UV, un matériau annexe.

Ce matériau annexe peut être tout composé, vis-à-vis duquel il est recherché ou non à pallier un défaut de solubilité aqueuse. Ce composé est par ailleurs choisi au regard de sa non réactivité à l'égard de l'absorbeur d'UV considéré parallèlement.

A titre de matériau annexe, il peut notamment être cité :
a) les filtres UV inorganiques tels que TiO₂, ZnO, ou encore CeO₂,
b) les additifs tels que les antioxydants ou les désactiveurs de radicaux libres,
c) les stabilisants,
d) les agents de colorations organiques ou inorganiques, et
e) les agents azurants.

### Procédé

La présente invention vise en outre un procédé utile pour la préparation de nanoparticules telles que décrites précédemment.

### Phase organique

Le procédé selon l'invention implique, d'une part, de disposer d'une phase organique dans laquelle l'absorbeur anti-UV est, pour l'essentiel, c'est-à-dire à raison d'au moins 90 % en poids, à l'état de soluté.

Le choix du solvant organique ou mélange de solvants organiques est donc avantageusement choisi au regard de la nature du composé absorbeur d'UV à traiter selon l'invention. Par ailleurs, il est également choisi au regard de son défaut de solubilité en milieu aqueux pour précisément obtenir une émulsion correspondante lors de sa mise en contact avec la phase aqueuse.

Ce choix relève clairement des compétences de l'homme de l'art.

Le solvant peut être volatil ou non et de préférence est choisi parmi les 2-hexanone, 3-hexanone, 4-methyl-2-pentanone, 3-Methyl-2-butanone, cyclohexanone, cyclohexane, isobutyraldéhyde, butyraldehyde, isovaleraldehyde, 2-methylbutyraldehyde, trimethylacetaldehyde, 2-Ethylbutyraldehyde, benzène, les xylènes et mesitylene, et méthyle éthyl cétone.

Conviennent tout particulièrement selon l'invention, les solvants caractérisés par un point de fusion élevé et parmi eux les aldéhydes.

Selon une variante préférée, le solvant organique est choisi parmi la méthyle éthyl cétone, le cyclohexane et l'isobutyraldéhyde.

La phase organique peut comprendre de 5 % à 20 % en poids par rapport à son poids total d'absorbeur(s) anti-UV.

### Phase aqueuse

Le procédé selon l'invention implique également de disposer, d'autre part, d'une phase aqueuse.

Cette phase aqueuse contient au moins un polymère hydrophile, notamment tel que défini ci-dessus.

La phase aqueuse peut comprendre de l'eau et/ou au moins un solvant hydrosoluble.

Par « solvant hydrosoluble », on désigne dans la présente invention un composé liquide à température ambiante et miscible à l'eau (miscibilité dans l'eau supérieure à 50 % en poids à 25 °C et pression atmosphérique).

Les solvants hydrosolubles utilisables dans les compositions selon l'invention peuvent ou non être volatils.

Parmi les solvants hydrosolubles pouvant être utilisés dans les compositions conformes à l'invention, on peut citer notamment les monoalcools inférieurs ayant de 1 à 5 atomes de carbone tels que l'éthanol et l'isopropanol, les glycols ayant de 2 à 8 atomes de carbone tels que l'éthylène glycol, le propylène glycol, le 1,3-butylène glycol et le dipropylène glycol, les cétones en C₃-C₄ et les aldéhydes en C₂-C₄.

Le polymère hydrophile peut être formulé à une concentration variant de 2 à 10 % en poids voire de 3 à 8 % en poids par rapport au poids de la phase organique considérée.

Comme il ressort de ce qui précède, le polymère ou mélange de polymères et le ou les agent(s) absorbeur(s) d'UV sont mis en présence dans des quantités en polymère(s) et composé(s) organique(s) ajustées pour que les nanoparticules possèdent un rapport pondéral composé(s) organique(s)/polymère(s) hydrophile(s) variant de 0,2 à 0,4.

Bien entendu, l'homme du métier est à même d'opérer les ajustements nécessaires des concentrations en polymères hydrophiles et en composés organiques pour obtenir des nanoparticules possédant un rapport pondéral composé(s) organique(s)/polymère(s) hydrophile(s) variant de 0,2 à 0,4.

### Tensioactif

Le mélange des deux phases est réalisé en présence d'un tensioactif.

Selon une variante préférée de l'invention, ce tensioactif figure initialement dans la phase aqueuse.

Les tensioactifs convenant à l'invention peuvent être choisis parmi toutes les catégories de tensioactifs (anioniques, cationiques, non ioniques ou amphotères). Plus précisément, ils peuvent être choisis parmi les tensioactifs conventionnellement mis en oeuvre dans les procédés d'émulsification de la phase organique considérée. C'est ainsi que pour obtenir des émulsions de type phase organique dans eau, on choisit des agents tensioactifs possédant une balance hydrophile/lipophile (HLB) supérieure à 14. Le terme « HLB » (Hydrophilic Lipophilic Balance) désigne le rapport de l'hydrophilie des groupements polaires des molécules de tensioactifs à l'hydrophobie de la partie lipophile de ces mêmes molécules ; il s'agit d'un terme couramment utilisé dans le domaine des agents de surface (voir le Traité « Techniques de l'Ingénieur », chapitre A7610 : « Les agents de surface »).

Les agents tensio-actifs utilisables selon l'invention sont avantageusement non amphotères et peuvent être plus particulièrement choisis parmi les agents tensioactifs anioniques dont la partie hydrophile est négativement chargée à l'image des sels d'acide gras, les agents tensio-actifs non ioniques dont la partie hydrophile n'est pas chargée à l'image des alcools et les agents tensio-actifs cationiques dont la partie hydrophile est positivement chargée à l'image d'un sel d'ammonium à longue chaîne.

Avantageusement, on prendra soin de solubiliser préalablement le ou les agents tensioactifs dans la phase aqueuse afin d'éviter d'éventuels problèmes de cinétique de solubilisation. Les agents tensioactifs sont mis en oeuvre dans le procédé selon l'invention à une quantité réduite et de préférence variant entre 0,1 % et 10 % en poids exprimé par rapport au poids de la phase aqueuse.

Le tensioactif est par exemple choisi parmi le bromure de cétyltriméthylammonium, le dodécyle sulfate de sodium et les surfactants Pluronic^{®}.

Selon un mode préféré de l'invention le tensioactif utilisé est le dodécyle sulfate de sodium (SDS).

L'émulsion est formée en ajoutant lentement, généralement au goutte à goutte, et sous agitation vigoureuse la phase organique à la phase aqueuse.

Cette agitation, généralement mécanique, est prolongée d'un délai suffisant pour obtenir l'émulsion attendue.

Cette émulsion peut être également obtenue en mélangeant les composantes dans un réacteur continu single-jet, la vitesse de la pompe gaveuse imposant un régime turbulent qui assure ainsi la qualité du mélange. L'avantage de cette approche réside dans le fait que l'émulsion ainsi formée peut être consécutivement « trempée » dans de l'azote liquide en continue pour former les nanoparticules attendues. A l'issue de cette étape, une émulsion, formée de gouttelettes de phase organique dispersées dans une phase aqueuse, est obtenue.

Il est à la portée de l'homme de l'art de l'ajuster en jouant sur la nature du solvant organique et du ou des tensioactif(s) retenu(s) mais également sur la vitesse d'agitation utilisée.

Le procédé selon l'invention comprend ensuite une étape de trempe thermique de l'émulsion.

Cette étape consiste à exposer l'émulsion à une température très basse pour figer les gouttelettes de l'émulsion à l'état de nanoparticules. Cette température peut varier de 5 °C à -250 °C, voire de -15 °C à -200 °C.

La trempe thermique est de préférence réalisée en introduisant l'émulsion au goutte à goutte dans de l'azote liquide.

Elle peut toutefois être également réalisée par pulvérisation de l'émulsion sur un gaz noble liquéfié tel que l'argon, du fréon, voire un mélange de solvant (alcool, cétone) /azote liquide.

Le procédé selon l'invention comprend en outre une étape consistant à isoler les nanoparticules obtenues à l'étape précédente. Elles peuvent notamment être isolées par filtration du milieu liquide le contenant.

Ces nanoparticules subissent avantageusement une lyophilisation. Cette lyophilisation peut être réalisée à bref délai de l'étape précédente. Elle vise à éliminer l'eau et les solvants organiques résiduels demeurant au niveau des nanoparticules.

### Applications

Les nanoparticules considérées selon l'invention peuvent être mises en oeuvre dans une grande diversité de matériaux devant être protégés des irradiations UV.

Ainsi, dans le domaine des matériaux polymères, il peut notamment s'agir d'élastomères, d'adhésifs, de peintures ou autres types de revêtements.

Plus précisément, les polymères ou autres substrats dans lesquels les nanoparticules considérées selon l'invention peuvent être incorporées sont par exemple :
- les polymères de monooléfines et dioléfines, par exemple le polypropylène et le polyisobutylène, ainsi que les polymères de cyclooléfines, par exemple le cyclopentène et le norborène,
- les copolymères de monooléfines et de dioléfines, par exemple le copolymère d'éthylène et de propylène, les copolymères d'alkyl méthacrylate et d'éthylène, les copolymères de vinylacétate et d'éthylène, les copolymères d'acide acrylique et d'éthylène, leurs mélanges ainsi que leurs mélanges avec d'autres polymères tels que les polyamides,
- les résines hydrocarbonées,
- les polystyrènes,
- les copolymères de styrène,
- les polymères contenant des halogènes,
- les polymères dérivés d'acides α,β-insaturés, et leurs dérivés tels que les polyacrylates et les polyméthacrylates, les polyacrylamides et les polyacrylonitriles,
- les copolymères de monomères mentionnés ci-dessus,
- les polymères dérivés d'alcools insaturés et d'amides de dérivés acyl ou acétal, tel que par exemple l'alcool polyvinylique,
- les homopolymères et copolymères d'éthers cycliques tels que le polyalkylene glycol,
- les polyacétals tels que le polyoxyméthylène,
- les polyamides et copolyamides dérivés de diamines et d'acides dicarboxyliques, et/ou d'acides aminocarboxyliques ou des lactames correspondants,
- les polyaramides,
- les polyurées, les polyimides, les polyamides-imides, les polyéthers imides, les polyesters imides, les polyhydantoïnes, et les polybenzimidazoles,
- les polyuréthanes,
- les polyesters dérivés d'acides dicarboxyliques et de diols et/ou dérivés d'acides hydroxycarboxyliques ou des lactones correspondantes,
- les polycarbonates et les carbonates de polyesters, et
- les polymères naturels tels que la cellulose, le caoutchouc, la gélatine, la soie, le cuir et leurs dérivés homologues chimiquement modifiés, tels que les acétates de cellulose.

La quantité de nanoparticules conformes à l'invention à utiliser dépend du matériau à protéger et de son utilisation.

Avantageusement, les nanoparticules considérées selon l'invention peuvent être présentes dans ces matériaux en une quantité pouvant aller jusqu'à 30 % en poids par rapport au poids total du matériau.

D'une manière générale, les nanoparticules considérées selon l'invention peuvent être mises en oeuvre à raison de 0,01 à 25% en poids par rapport au poids total du matériau l'incorporant.

L'invention concerne ainsi une composition, et plus particulièrement un matériau comprenant des nanoparticules conformes à l'invention.

L'invention concerne également un procédé de stabilisation d'un matériau pouvant être organique ou inorganique à l'égard d'une dégradation UV, comprenant l'addition à ce matériau ou à un précurseur de ce matériau d'au moins une nanoparticule conforme à l'invention, à titre d'agent absorbeur d'ultraviolets.

Comme il ressort de ce qui suit, les nanoparticules considérées selon l'invention peuvent être mises en oeuvre directement au niveau du matériau à traiter mais également au niveau d'un précurseur de ce matériau c'est-à-dire un des produits de départ nécessaire à la préparation du matériau final, par exemple un monomère pour la préparation de matériau polymérique.

L'incorporation dans les polymères organiques, par exemple les polymères organiques synthétiques, et en particulier les polymères thermoplastiques, peut être effectuée par addition des nanoparticules considérées selon l'invention et de tout autre additif par les méthodes conventionnelles dans ce domaine.

Ainsi, lors d'une incorporation au sein d'un matériau polymérique, les nanoparticules considérées selon l'invention peuvent être incorporées soit directement au polymère, soit avant ou pendant la polymérisation du monomère correspondant ou encore avant la formation d'un réseau. Les polymères traités selon cette méthode peuvent ensuite être transformés en articles tels que des fibres, des films, des feuilles, des emballages, des tubes et autres profilés, par des méthodes conventionnelles telles que le thermomoulage, l'extrusion ou encore l'injection.

De même, l'utilisation des nanoparticules considérées selon l'invention, pour les revêtements, par exemple pour les peintures, est particulièrement intéressante. Les revêtements selon l'invention peuvent être appliqués à n'importe quel substrat, par exemple en métal, en bois, en plastique ou en céramique.

Les nanoparticules considérées selon l'invention conviennent également pour l'utilisation dans un procédé de stabilisation photochimique de matériaux fibreux non colorés, colorés ou imprimés, comprenant par exemple la soie, le cuir, la laine, les polyamides, les polyesters, ou les polyuréthanes, et plus particulièrement les matériaux fibreux contenant de la cellulose tels que le coton, le lin, la jute, ainsi que les fibres viscoses et la cellulose régénérée.

L'invention concerne également un procédé pour accroître le facteur de protection solaire de fibres textiles comprenant l'immobilisation sur lesdites fibres d'au moins une nanoparticule conforme à l'invention.

Cette immobilisation ou encore fixation peut par exemple être réalisée selon la technique dite du foulardage. Cette technique consiste à réaliser une solution aqueuse contenant les nanoparticules, éventuellement des dispersants, un pH ajusté et des liants. Le textile à traiter y est trempé pour imprégnation, puis essoré.

Une autre technique convenant à la fixation est celle de l'enduction qui consiste à enduire le textile à traiter d'une solution visqueuse aqueuse contenant les nanoparticules, un liant, éventuellement des dispersants, un pH ajusté et des épaississants.

La mise en oeuvre de ces deux techniques relève également des compétences de l'homme de l'art.

Le matériau textile à protéger est de préférence un matériau textile teint, en particulier un matériau textile teint avec des colorants dispersés dans une solution aqueuse. Ces colorants peuvent être présents dans la solution colorante sous la forme d'une suspension. Ils peuvent appartenir à différentes classes de colorants tels que les coumarines ou les colorants nitrés. Des mélanges de colorants peuvent également être utilisés selon la présente invention. Si les nanoparticules considérées selon l'invention sont ajoutées pendant l'étape de coloration, elles peuvent l'être de manière à ce que le matériau textile soit d'abord traité avec lesdites nanoparticules puis, ensuite, avec le colorant ou, de préférence, de manière à ce que le matériau soit traité simultanément avec lesdites nanoparticules et le colorant.

Pour la production d'encres, les nanoparticules considérées selon l'invention peuvent être mélangées aux pâtes d'encres.

Les nanoparticules considérées selon l'invention conviennent également en tant qu'agents photoprotecteurs dans les préparations cosmétiques.

Les exemples et figures qui suivent sont présentés à titre illustratif et non limitatif du domaine de l'invention.
Figure 1 : Représentation du spectre d'absorption de nanoparticules de HMPB2 conformes à l'invention, possédant une couche externe formée par un alcool polyvinylique.
Figure 2 : Représentation du spectre d'absorption de nanoparticules d'acide pyrène carboxylique-1 conformes à l'invention, possédant une couche externe formée par un alcool polyvinylique.
Figure 3 : Représentation du spectre d'absorption de nanoparticules de HMPB2 conformes à l'invention, possédant une couche externe formée par un acide polyacrylique.

### EXEMPLE 1

Une solution S1 est préparée à partir de 6 ml d'une solution aqueuse d'alcool polyvinylique (Mw 31000-50000) (MOWIOL®) à 5 % massique et 0,3 g de dodécyl sulfate de sodium.

Une solution S2 de 2-(2H-benzotriazol-2-yl)-4,6-bis(1-méthyl-1-phényléthyl) Phénol (HMPB2) est préparée par dissolution de 0,26 g de HMPB2 dans 22 ml de cyclohexane sous agitation.

On ajoute au goutte à goutte et à température ambiante la solution S2 à la solution S1 sous forte agitation au sein d'un bécher ou d'une ampoule à décanter. L'agitation est maintenue pendant 2 heures pour que l'émulsion s'homogénéise.

L'émulsion S3 est ensuite introduite au goutte à goutte dans de l'azote liquide pour figer les gouttelettes à l'état de nanoparticules. L'ensemble est ensuite filtré et lyophilisé à l'aide d'un lyophilisateur, ou d'un schlenck maintenu sous vide dynamique par une pompe à palette et muni d'un piège froid pendant 24 heures.

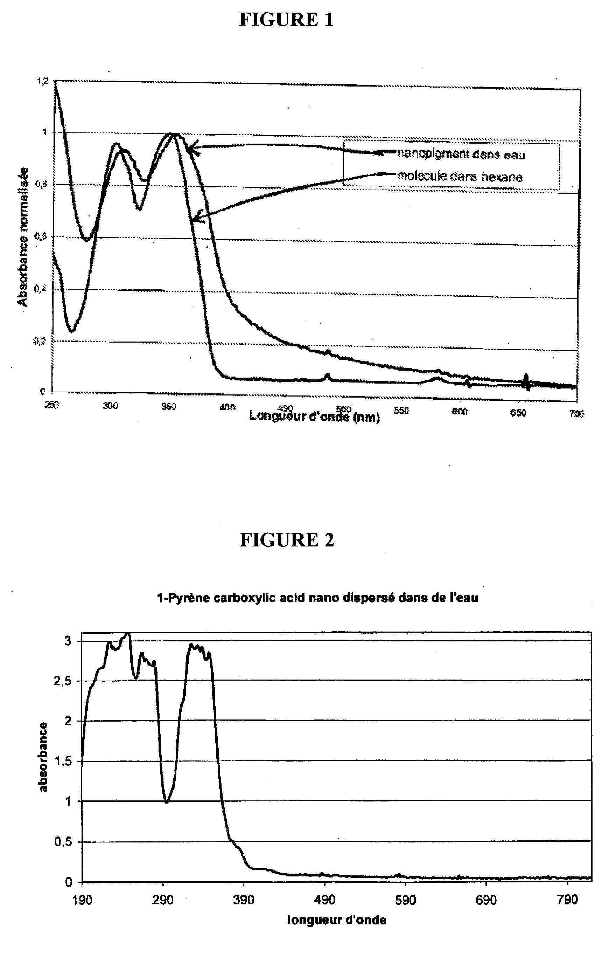

La poudre ainsi obtenue se redisperse aisément dans l'eau et comme illustré en figure 1 présente le spectre d'absorption caractéristique de la HMPB2 de départ.

### EXEMPLE 2

Des nanoparticules sont préparées selon le mode opératoire décrit en exemple 1 mais en utilisant à titre de solution S2, une solution S2', préparée par dissolution de 0,46 g d'acide pyrène carboxylique-1 dans 70 ml de Methyl Ethyl cétone sous agitation et chauffage modéré, c'est-à-dire à une température inférieure à 30 °C, voire à température ambiante.

La poudre ainsi obtenue se redisperse aisément dans l'eau et, comme illustré en figure 2, présente un spectre d'absorption caractéristique de la molécule de départ.

Un échantillon de tissu (ECH1) est imprégné selon la technique de foulardage par une solution aqueuse d'acide pyrène carboxylique-1 concentrée à 6,82 mg/ml en molécule active obtenu selon le procédé décrit ci-dessus.

L'échantillon (ECH1) obtenu est blanc (couleur du tissu) et est soumis à un test de vieillissement dans une enceinte SUNTEST de la société ATLAS. Les conditions de vieillissement sont les suivantes: irradiance à 620W/m2, lampe à arc xénon équipée d'un filtre dit « verre à vitre » coupant les UV en dessous de 310 nm, durée d'exposition 24h.

A l'issu de ce test de vieillissement, ECH1 a très légèrement jauni, montrant la capacité des nanoparticules selon l'invention à protéger le tissu exposé.

Le traitement de la présente invention permet manifestement d'améliorer la tenue à la lumière de molécules sensibles.

### EXEMPLE 3

Des nanoparticules sont préparées selon le mode opératoire décrit dans l'exemple 1 mais en utilisant à titre de solution S2, une solution S2", préparée par dissolution de 0,4515g de HMPB2 dans 18 ml d'isobutyraldéhyde sous agitation et chauffage modéré, c'est-à-dire à une température inférieure à 30 °C, voire à une température ambiante.

La poudre ainsi obtenue se redisperse aisément dans l'eau et présente un spectre d'absorption caractéristique de la HMPB2 de départ.

### EXEMPLE 4

Une solution S1 est préparée à partir de 6 ml d'une solution aqueuse d'acide polyacrylique de poids moléculaire Mw=450000 g/mol (commercialisé par la société Aldrich sous le N°181285) à 5 % massique et 0,3 g de dodécyl sulfate de sodium.

Une solution S2 de 2-(2H-benzotriazol-2-yl)-4,6-bis(1-méthyl-1-phényléthyl)phénol (HMPB2) est préparée par dissolution de 0,26 g de HMPB2 dans 22 ml de cyclohexane sous agitation.

On ajoute au goutte à goutte et à température ambiante la solution S2 à la solution S1 sous forte agitation au sein d'un bécher ou d'une ampoule à décanter. L'agitation est maintenue pendant 2 heures pour que l'émulsion s'homogénéise.

L'émulsion S3 est ensuite introduite au goutte à goutte dans de l'azote liquide pour figer les gouttelettes à l'état de nanoparticules. L'ensemble est ensuite filtré et lyophilisé à l'aide d'un lyophilisateur, ou d'un schlenck maintenu sous vide dynamique par une pompe à palette et muni d'un piège froid pendant 24 heures.

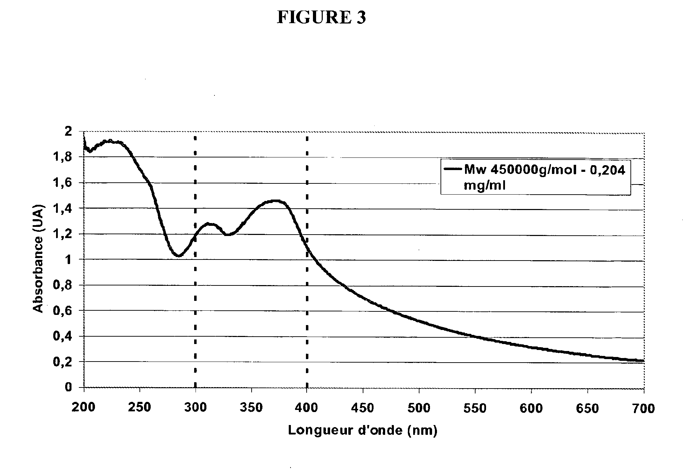

La poudre ainsi obtenue se redisperse aisément dans l'eau et, comme illustré en figure 3, présente le spectre d'absorption caractéristique de la HMPB2 de départ.

### EXEMPLE 5 PAS SELON L'INVENTION

Des nanoparticules sont préparées selon le mode opératoire décrit en exemple 1 mais en utilisant à titre de solution S1, une solution S1' préparée à partir de 6 ml d'une solution aqueuse d'alcool polyvinylique (Mw 9000-10000) (commercialisé par la société Aldrich sous le N°360627).

La poudre obtenue selon l'exemple 1 est dispersée dans l'eau.

La valeur de la limite de solubilité est estimée par approche successive en ajoutant progressivement la poudre dans l'eau.

L'agitation est stoppée lorsqu'il reste des insolubles visibles à l'oeil nu.

Selon le même protocole, la limite de solubilité est évaluée pour la poudre de nanoparticules obtenues selon l'exemple 1.

Les résultats sont présentés dans le tableau 1 suivant.

**TABLEAU 1**

| Poids moléculaire de l'alcool polyvinylique (g/mol) | Limite de solubilité (mg/ml) |
|---|---|
| 31000-50000 | 10,1 |
| 9000-10000 | 0,45 |

Ces résultats montrent que des nanoparticules conformes à l'invention préparées à partir d'un polymère hydrophile présentant un poids moléculaire plus élevé, présentent une dispersibilité dans l'eau accrue.

## Revendications

1. Nanoparticule possédant un coeur formé en tout ou partie d'au moins un composé organique absorbeur d'UV, sous forme cristallisée, enrobé d'une couche externe formée d'au moins un polymère hydrophile, le ou lesdits composé(s) organique(s) absorbeur(s) d'UV et le ou lesdits polymère(s) hydrophile(s) étant associés dans un rapport pondéral composé(s) organique(s)/polymère(s) hydrophile(s) variant de 0,2 à 0,4,
dans laquelle ledit polymère hydrophile est un alcool polyvinylique ou un acide polyacrylique de poids moléculaire supérieur à 20 000 g/mole.

2. Nanoparticule selon la revendication précédente **caractérisée en ce qu'**elle est hydrodispersible.

3. Nanoparticule selon l'une quelconque des revendications précédentes dans laquelle le polymère hydrophile possède un poids moléculaire variant de 25 000 à 600 000 g/mole.

4. Nanoparticule selon l'une quelconque des revendications précédentes, dans laquelle ledit acide polyacrylique possède un poids moléculaire compris entre 100 000 et 600 000 et notamment de l'ordre de 450 000 g/mole.

5. Nanoparticule selon l'une quelconque des revendications précédentes, possédant une couche externe formée en tout ou partie d'au moins un alcool polyvinylique de poids moléculaire variant de 25 000 à 50 000 g/mole.

6. Nanoparticule selon l'une quelconque des revendications précédentes, possédant une taille moyenne inférieure à 500 nm, de préférence inférieure à 300 nm, de préférence encore inférieure à 200 nm.

7. Nanoparticule selon l'une quelconque des revendications précédentes, dans laquelle ledit composé absorbeur d'UV est choisi parmi les benzotriazoles substitués, les hydroxybenzophénones, le pyrène et ses dérivés.

8. Procédé de préparation de nanoparticules selon l'une quelconque des revendications 1 à 7 comprenant au moins les étapes consistant à :
- disposer d'une phase organique contenant au moins un composé absorbeur d'UV à l'état de soluté,
- disposer d'une phase aqueuse contenant au moins un polymère hydrophile, ledit polymère hydrophile étant un alcool polyvinylique ou un acide polyacrylique de poids moléculaire supérieur à 20 000 g/mole,
- ajouter la phase organique à la phase aqueuse dans des conditions propices à la formation d'une émulsion de type phase organique dans phase aqueuse et en présence d'au moins un tensioactif apte à stabiliser ladite émulsion,
- réaliser une trempe thermique de l'émulsion ainsi obtenue pour former lesdites nanoparticules, et
- isoler lesdites nanoparticules,
les quantités en polymère(s) et composé(s) organique(s) étant ajustées pour que les nanoparticules possèdent un rapport pondéral composé(s) organique(s)/polymère(s) hydrophile(s) variant de 0,2 à 0,4.

9. Procédé selon la revendication précédente dans lequel les nanoparticules isolées sont lyophilisées.

10. Procédé selon la revendication 8 ou 9, **caractérisé en ce que** ledit polymère hydrophile est tel que défini selon l'une quelconque des revendications 3 à 5.

11. Procédé selon l'une quelconque des revendications 8 à 10, **caractérisé en ce que** la phase organique comprend à titre de solvant le cyclohexane, la méthyle éthyle cétone ou l'isobutyraldéhyde.

12. Procédé selon l'une quelconque des revendications 8 à 11, dans lequel la trempe thermique est effectuée par mise en contact de l'émulsion avec de l'azote liquide.

13. Composition contenant au moins une nanoparticule selon l'une quelconque des revendications 1 à 7.

14. Composition selon la revendication précédente, **caractérisée en ce qu'**il s'agit d'un matériau polymérique et notamment d'un textile.

15. Procédé de stabilisation d'un matériau à l'égard d'une dégradation UV, comprenant l'addition à ce matériau ou à un précurseur de ce matériau d'au moins une nanoparticule selon l'une quelconque des revendications 1 à 7, à titre d'agent absorbeur d'ultraviolets.

16. Procédé pour accroître le facteur de protection solaire de fibres textiles comprenant l'immobilisation sur lesdites fibres d'au moins une nanoparticule selon l'une quelconque des revendications 1 à 7.

## Patentansprüche

1. Nanopartikel mit einem Kern, der ganz oder zum Teil aus wenigstens einer UVabsorbierenden organischen Verbindung in kristallisierter Form gebildet ist, die umhüllt ist von einer äußeren Schicht, die aus wenigstens einem hydrophilen Polymer gebildet ist, wobei die genannte(n) UV-absorbierende(n) organische(n) Verbindung(en) und das oder die hydrophile(n) Polymer(e) in einem Gewichtsverhältnis organische Verbindungen/hydrophile Polymere stehen, das zwischen 0,2 und 0,4 variiert, wobei das hydrophile Polymer ein Polyvinylalkohol oder eine Polyacrylsäure mit einem Molekulargewicht von mehr als 20 000 g/mol ist.

2. Nanopartikel nach dem vorstehenden Anspruch, **dadurch gekennzeichnet, dass** es hydrodispersibel ist.

3. Nanopartikel nach einem der vorstehenden Ansprüche, bei dem das hydrophile Polymer ein Molekulargewicht zwischen 25 000 und 600 000 g/mol aufweist.

4. Nanopartikel nach einem der vorstehenden Ansprüche, bei dem die genannte Polyacrylsäure ein Molekulargewicht zwischen 100 000 und 600 000, insbesondere in der Größenordnung von 450 000 g/mol aufweist.

5. Nanopartikel nach einem der vorstehenden Ansprüche, mit einer äußeren Schicht, die ganz oder zum Teil aus wenigstens einem Polyvinylalkohol mit einem Molekulargewicht zwischen 25 000 und 50 000 g/mol gebildet ist.

6. Nanopartikel nach einem der vorstehenden Ansprüche, mit einer mittleren Größe unterhalb von 500 nm, vorzugsweise unterhalb von 300 nm, weiter vorzugsweise unterhalb von 200 nm.

7. Nanopartikel nach einem der vorstehenden Ansprüche, bei dem die genannte UV-absorbierende Verbindung ausgewählt ist unter substituierten Benzotriazolen, Hydroxibenzophenonen, Pyren und seinen Derivaten.

8. Verfahren zur Herstellung von Nanopartikeln nach einem Ansprüche 1 bis 7, das wenigstens die folgenden Schritte aufweist:
- Bereitstellen einer organischen Phase, die wenigstens eine UV-absorbierende Verbindung in gelöstem Zustand enthält,
- Bereitstellen einer wässrigen Phase, die wenigstens ein hydrophiles Polymer enthält, wobei das hydrophile Polymer ein Polyvinylalkohol oder eine Polyacrylsäure mit einem Molekurlargewicht von mehr als 20 000 g/mol ist,
- Zugeben der organischen Phase zu der wässrigen Phase unter Bedingungen, die günstig sind für die Bildung einer Emulsion vom Typ organische Phase in wässriger Phase und in Gegenwart wenigstens eines Tensids, das geeignet ist, die genannte Emulsion zu stabilisieren,
- thermisches Aushärten der so erhaltenen Emulsion, zur Bildung der genannten Nanopartikel und
- Isolieren der Nanopartikel,
wobei die Mengen des Polymers oder der Polymere und der organische(n) Verbindung(en) so eingestellt sind, dass die Nanopartikel ein Gewichtsverhältnis organische Verbindungen/hydrophile Polymere zwischen 0,2 und 0,4 aufweisen.

9. Verfahren nach dem vorstehenden Anspruch, bei dem die isolierten Nanopartikel gefriergetrocknet werden.

10. Verfahren nach Anspruch 8 oder 9, **dadurch gekennzeichnet, dass** das hydrophile Polymer von der Art ist, wie sie in einem der Ansprüche 3 bis 5 definiert ist.

11. Verfahren nach einem der Ansprüche 8 bis 10, **dadurch gekennzeichnet, dass** die organische Phase als Lösungsmittel Cyclohexan, Methylethylketon oder Isobutyraldehyd enthält.

12. Verfahren nach einem der Ansprüche 8 bis 11, bei dem die thermische Auswertung bewirkt wird, indem die Emulsion mit flüssigem Stickstoff in Kontakt gebracht wird.

13. Zusammensetzung, die wenigstens ein Nanopartikel nach einem der Ansprüche 1 bis 7 enthält.

14. Zusammensetzung nach dem vorstehenden Anspruch, **dadurch gekennzeichnet, dass** es sich um ein polymeres Material, insbesondere ein Textilmaterial handelt

15. Verfahren zur Stabilisierung eines Materials gegen Schädigung durch UV, mit Zugabe wenigstens eines Nanopartikels nach einem der Ansprüche 1 bis 7 als Ultraviolettstrahlung absorbierendes Mittel zu dem Material oder einem Vorläufer dieses Materials.

16. Verfahren zur Erhöhung des Sonnenschutzfaktors von Textilfasern, mit Fixieren wenigstens eines Nanopartikels nach einem der Ansprüche 1 bis 7 auf diesen Fasern.

## Claims

1. A nanoparticle having a core formed in all or part of at least one UV-absorbing organic compound, in crystalline form, coated with an outer layer formed of at least one hydrophilic polymer, said UV-absorbing organic compound(s) and hydrophilic polymer(s) being combined in an organic compound(s)/hydrophilic polymer(s) ratio by weight varying from 0.2 to 0.4,
wherein said hydrophilic polymer is a polyvinyl alcohol or a polyacrylic acid having a molecular weight of greater than 20 000 g/mol.

2. The nanoparticle as claimed in the preceding claim, **characterized in that** it is water-dispersible.

3. The nanoparticle as claimed in anyone of the preceding claims, wherein the hydrophilic polymer has a molecular weight varying from 25 000 to 600 000 g/mol.

4. The nanoparticle as claimed in anyone of the preceding claims, wherein said polyacrylic acid has a molecular weight ranging from 100 000 to 600 000 g/mol, in particular of around 450 000 g/mol.

5. The nanoparticle as claimed in anyone of the preceding claims, having an outer layer formed in all or part of at least one polyvinyl alcohol with a molecular weight varying from 25 000 to 50 000 g/mol.

6. The nanoparticle as claimed in anyone of the preceding claims, having a mean size of less than 500 nm, preferably of less than 300 nm, more preferably of less than 200 nm.

7. The nanoparticle as claimed in anyone of the preceding claims, wherein said UV-absorbing compound is chosen from substituted benzotriazoles, hydroxybenzophenones, and pyrene and its derivatives.

8. A process for the preparation of nanoparticles according to anyone of claims 1 to 7,
comprising at least the stages consisting in:
- providing an organic phase comprising at least one UV-absorbing compound in the solute state,
- providing an aqueous phase comprising at least one hydrophilic polymer,
wherein said hydrophilic polymer is a polyvinyl alcohol or a polyacrylic acid having a molecular weight of greater than 20 000 g/mol,
- adding the organic phase to the aqueous phase under conditions favorable to the formation of an emulsion of the type consisting of an organic phase in an aqueous phase and in the presence of at least one surfactant capable of stabilizing said emulsion,
- carrying out a thermal quenching of the emulsion thus obtained in order to form said nanoparticles, and
- isolating said nanoparticles,
the amounts of polymer(s) and organic compound(s) being adjusted in order for the nanoparticles to have an organic compound(s)/hydrophilic polymer(s) ratio by weight varying from 0.2 to 0.4.

9. The process as claimed in the preceding claim, wherein the isolated nanoparticles are lyophilized.

10. The process as claimed in claim 8 or 9, **characterized in that** said hydrophilic polymer is as defined in anyone of claims 3 to 5.

11. The process as claimed in anyone of claims 8 to 10, **characterized in that** the organic phase comprises, as solvent, cyclohexane, methyl ethyl ketone or isobutyraldehyde.

12. The process as claimed in anyone of claims 8 to 11, wherein the thermal quenching is carried out by bringing the emulsion into contact with liquid nitrogen.

13. A composition comprising at least one nanoparticle as defined in anyone of claims 1 to 7.

14. The composition as claimed in the preceding claim, **characterized in that** a polymeric material in particular a textile is concerned.

15. A process for the stabilization of a material with regard to UV degradation, comprising the addition, to this material or to a precursor of this material, of at least one nanoparticle according to anyone of claims 1 to 7 as agent for absorbing ultraviolet radiation.

16. A process for increasing the sun protection factor of textile fibers, comprising the immobilization, on said fibers, of at least one nanoparticle according to anyone of claims 1 to 7.
